# EUROPEAN PATENT APPLICATION

(11) **EP 1 772 859 A2**
(43) Date of publication of application: **11.04.2007**
(21) Application number: 06112994.6
(22) Date of filing: 24.04.2006
(51) Int. Cl.: G11B 7/08

(54) **Optical disc drive**

(30) Priority: 08.10.2005 KR 10200594639
(71) Applicant: Samsung Electronics Co., Ltd., Suwon-si 442-742 Gyeonggi-Do (KR)
(72) Inventor: Bae, Won Youl, Gwonseon-Gu Suwon-Si Gyeonggi-do (KR)
(74) Representative: Walaski, Jan Filip

(57) **Abstract**

An optical disc drive adjusts the skew and the misalignment of the rotation centre of an optical disc and a light beam centre of an optical pick-up. The optical disc drive includes an optical pick-up recording/reproduce information onto/from the optical disc (D), pick-up shafts (41) guiding the optical pick-up, an adjusting device (53) moving the pick-up shafts vertically to adjust a slope of the optical pick-up, and shaft guides (51) guiding the pick-up shafts to travel vertically and horizontally. The shaft guides include guide surfaces (51a) contacting the pick-up shafts. The shaft guides guide the pick-up shafts to move towards the turntable when the pick-up shafts move upward, and guide the pick-up shafts to move away from the turntable when the pick-up shafts move downward.

## Description

The present invention relates to an optical disc drive, and more particularly, to an optical disc drive in which the rotation plane of an optical disc and the movement plane of an optical pick-up are adjusted to be parallel to each other and misalignment of the rotation centre of the optical disc and the light beam centre of the optical pick-up are also compensated.

In general, an optical disc drive is commonly employed in a computer system or an optical recording/reproducing apparatus, such as a compact disc (CD) player and a digital versatile disk (DVD) player, to project a light beam onto an optical disc, such as a compact disc (CD), a digital versatile disc (DVD), or the like, to record information and to reproduce information recorded on the optical disc.

Recently, much research for typical optical discs such as CDs and DVDs, and blue-ray discs (BD) as a next generation optical disc having an increased recording capacity has been carried out. In order to record and reproduce information onto and from the high-density optical discs, the optical disc drive components must be accurate. In CDs, the accuracy of the required components can be satisfied even when manufacturing the components using conventional moulds. However, as the recording density of optical discs increases, conventional moulding techniques cannot achieve the required accuracy. As a result, low accuracy components can be used in consideration of manufacturing costs; however, the manufactured components must go through specific processes when manufacturing the optical disc drive.

The optical disc drive includes a skew adjusting device for adjusting the rotation plane of an optical disc and the movement plane of an optical pick-up to be parallel to each other such that a light beam is projected onto the optical disc in the direction perpendicular to the optical disc. The plane adjustment is required in the optical disc when a plane where a spindle motor is placed is not parallel to the movement plane of the optical pick-up, or when a rotation shaft of the spindle motor is tilted in the vertical direction so that the turntable is not parallel to the movement plane of the optical pick-up.

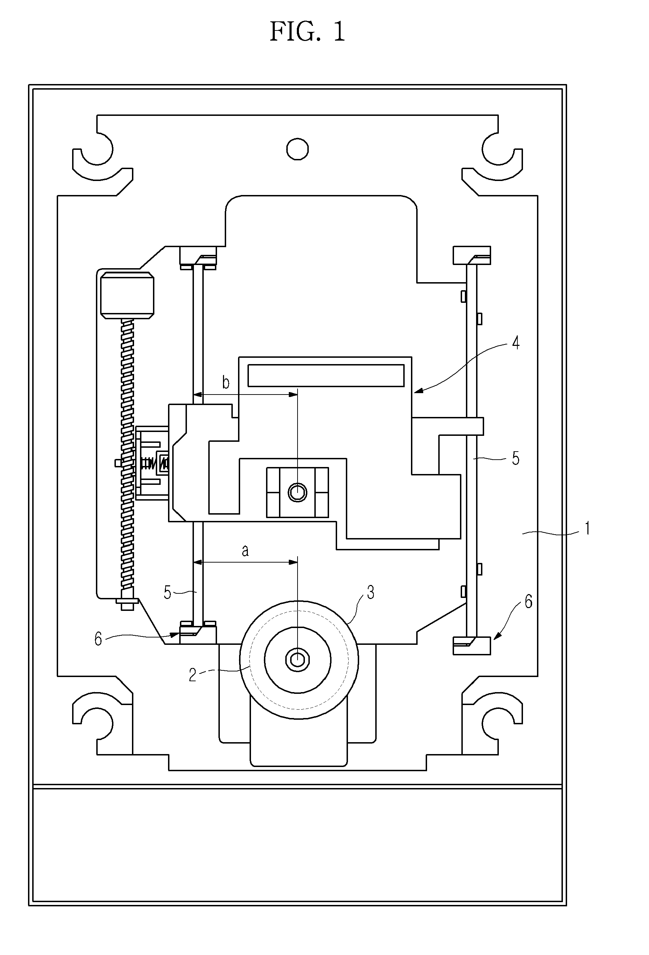

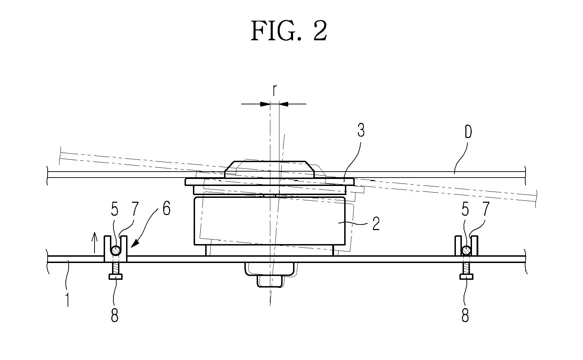

FIG. 1 is a plan view schematically illustrating a typical optical disc drive, and FIG. 2 is a front sectional view illustrating a skew adjusting device of the optical disc drive shown in FIG. 1. For the sake of simplicity, an optical pick-up is not shown in FIG. 2. As shown in FIGS. 1 and 2, a base chassis 1 of the optical disc drive includes a spindle motor 2 for a turntable 3 and an optical pick-up 4 (not shown in FIG. 2) for projecting a light beam onto an optical disc D to record and reproduce information onto and from the optical disc D. The sides of the optical pick-up 4 are supported by guide shafts 5 such that the optical pick-up 4 moves along the guide shafts 5 in the radial direction of the optical disc D for recording/reproducing information onto/from the optical disc D. Meanwhile, at the ends of the guide shafts 5, skew adjusting devices 6 are installed respectively to adjust the movement plane of the optical pick-up 4.

The skew adjusting devices 6 each includes a guide recess 7 for guiding each of the guide shafts 5 in the vertical direction, and an adjusting screw 8 penetrating the base chassis 1 to move each of the guide shafts 5 in the vertical direction. As a result, when the guide shafts 5 are raised or lowered by rotating the adjusting screws 8, the slope of the optical pick-up supported by the guide shafts 5 is changed so that the movement plane of the optical pick-up and the rotation plane of the optical disc D can be adjusted in parallel to each other.

When the movement plane of the optical pick-up is adjusted to be parallel to the rotation plane of the optical disc, and the rotation centre of the optical disc is aligned with the centre of light beam of the optical pick-up, the performance of the optical disc drive can be controlled; however, these parameters serve as important factors for determining the performance of the optical disc drive. Thus, when assuming the distance from the centre of one of the guide shafts 5 to the centre of the turntable 3 as 'a', as shown in FIG. 1, and the distance from the centre of one of the guide shafts 5 to the centre of the light beam of the optical pick-up 4 as 'b', 'a' and 'b' should be aligned with each other if possible.

However, as shown in FIG. 2, in a case that the turntable 3 is tilted to the right so that the optical disc D is tilted in the clockwise direction, in order to adjust this, the adjusting screw 8 is rotated to raise the guide shafts 5 so that the rotation plane of the optical disc D is parallel to the movement plane of the optical pick-up 4. However, such an adjustment cannot compensate deviation 'r' generated between the two centres when the turntable 3 is tilted. This is the same as the case that the turntable 3 is tilted to the left so that the optical disc D is tilted in the counterclockwise direction. As such, when the rotation centre of the optical disc D and the centre of the light beam of the optical pick-up are misaligned with each other over an allowed range, there are many error signals generated, thereby deteriorating the performance of the optical disc drive.

Various aspects and example embodiments of the present invention provide an optical disc drive capable of adjusting skews and compensating the misalignment between the rotation centre of an optical disc and the centre of a light beam of an optical pick-up.

Additional aspects and/or advantages of the invention will be set forth in part in the description which follows and, in part, will be obvious from the description, or may be learned by practice of the invention.

In accordance with an aspect of the present invention, an optical disc drive is provided with a turntable on which an optical disc is loaded and rotated; an optical pick-up for traveling along a radial direction of the optical disc loaded on the turntable and for projecting a light beam onto the optical disc to record and reproduce information onto and from the optical disc; pick-up shafts for guiding the movement of the optical pick-up; an adjusting part for inducing the vertical movement of the pick-up shafts to adjust a slope of the optical pick-up; and shaft guides for guiding the pick-up shafts to travel vertically and horizontally. As such, the pick-up shafts are moved in the horizontal direction by the shaft guides so that the movement plane of the optical pick-up and the rotation plane of the optical disc are parallel to each other and an error generated by the misalignment of the light beam centre of the optical pick-up and the rotation centre of the optical disc can be compensated.

According to an aspect of the present invention, the guide shafts each includes a guide surface for guiding the pick-up shafts to travel in the direction toward the turntable when the pick-up shafts move upward, and for guiding the pick-up shafts to move in the direction away from the turntable when the pick-up shafts move downward.

The optical disc drive further includes elastic members for elastically biasing the pick-up shafts toward the guide surfaces. The elastic members include elastic plates contacting the upper sides of the pick-up shafts to press the pick-up shafts toward the guide surfaces.

The pick-up shafts include a first pick-up shaft penetrating an end of the optical pick-up and supporting the optical pick-up, and the shaft guides are installed in the first pick-up shaft.

The adjusting part includes adjusting screws rotatably installed in the lower sides of the pick-up shafts to rotate in the forward direction and in the reverse direction such that the pick-up shafts are raised and lowered.

In accordance with another aspect of the present invention, an optical disc drive is provided with a turntable; an optical pick-up for traveling along a radial direction of the optical disc loaded on the turntable and for projecting a light beam onto the optical disc to record and reproduce information onto and from the optical disc; pick-up shafts for guiding the movement of the optical pick-up; and a skew adjusting device for adjusting the height of the pick-up shafts to adjust a slope of the optical pick-up. The skew adjusting device includes an adjusting means for adjusting the height of the pick-up shafts, shaft guides including slopes for allowing the pick-up shafts to travel in the diagonal direction when the pick-up shafts are moved by the adjusting means, and elastic members for elastically biasing the pick-up shafts toward the slopes. The slopes are formed such that the farther from the turntable the pick-up shafts are as the pick-up shafts travels from the upper sides to the lower sides of the slopes.

Embodiments of the invention will now be described by way of example with reference to the accompanying drawings, in which:
FIG. 1 is a plan view schematically illustrating a typical optical disc drive;
FIG. 2 is a front sectional view illustrating a skew adjusting device of the optical disc drive shown in FIG. 1;
FIG. 3 is a perspective view illustrating an optical disc drive according to an embodiment of the present invention;
FIG. 4 is an enlarged perspective view of a portion "A" of the optical disc drive shown in FIG. 3;
FIG. 5 is a view illustrating the adjustment performed when an optical disc is tilted in a clockwise direction in the optical disc drive according to an embodiment of the present invention; and
FIG. 6 is a view illustrating the adjustment performed when an optical disc is tilted in a counterclockwise direction in the optical disc drive according to an embodiment of the present invention.

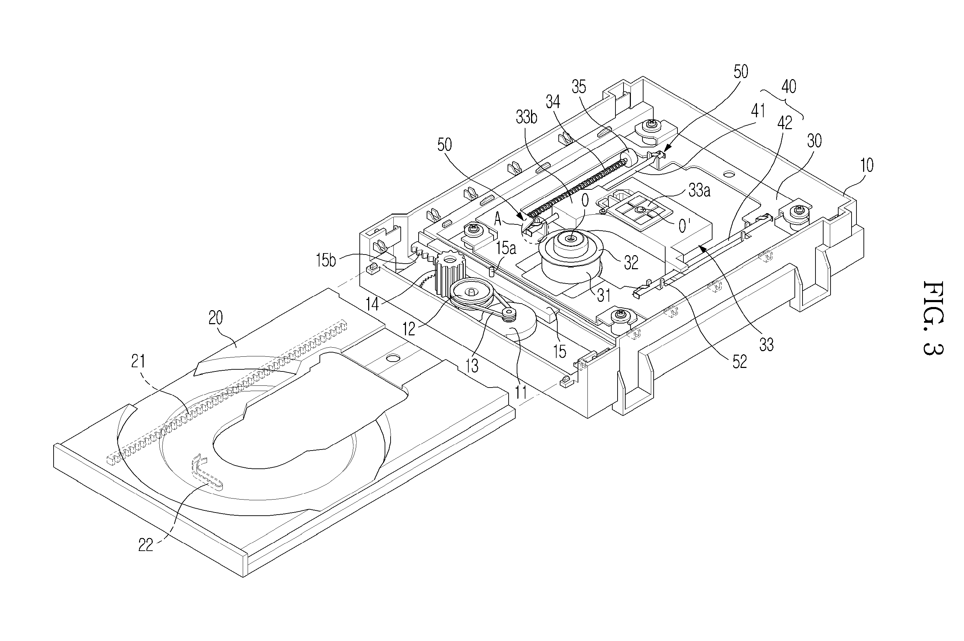

As shown in FIG. 3, the optical disc drive according to an embodiment of the present invention includes a main frame 10, and a tray 20 installed to move in and out of the main frame 10 to load and unload an optical disc (not shown). The tray 20 slides through the opened front side of the main frame 10 to perform the loading and unloading of the optical disc (not shown).

In the front bottom of the main frame 10, a loading device is provided for supplying the driving force necessary to slide the tray 20 into/out of the main frame 10. The loading device includes a loading motor 11, a pulley 12 for transmitting the driving force of the loading motor 11 to the tray 20, a belt 13, and a pinion gear 14. Moreover, in the lower side of the tray 20, a rack gear 21 connected to the pinion gear 14 is installed to reciprocate the tray 20.

In the main frame 10, a base chassis 30 is hinged to rotate in the vertical direction and various components for recording and reproducing information onto and from the optical disc are installed therein. The base chassis 30 includes a turntable 32 on which the optical disc (not shown) is transported into the main frame 10 and is rotated by a spindle motor 31, and an optical pick-up 33 for recording information onto the optical disc (not shown) loaded on the turntable 32 and for reproducing information from the optical disc (not shown). The optical pick-up 33 includes an actuator 33a for reacting to shift and eccentricity of the rotating optical disc and a pick-up base 33b in which various optical components containing the actuator 33a are installed.

A sliding cam 15 is installed between the base chassis 30 and the loading device. The sliding cam 15 includes a sliding protrusion 15a associated with a guide groove 22 formed in the lower side of the tray 20 and a rack gear 15b associated with the pinion gear 14 of the loading device. The sliding cam 15 slides to the right and to the left during the loading and the unloading of the tray 20 to guide the ascent and the descent of the base chassis 30.

The optical pick-up 33 moves in the radial direction of the optical disc (not shown) and projects a light beam onto the recording surface of the optical disc (not shown). For this type of movement, an optical pick-up transporting device is installed in the base chassis 30. The optical pick-up transporting device includes a transporting screw 34 for transmitting the driving force to the optical pick-up 33 to move in the radial direction of the optical disc (not shown), a transporting motor 35 installed in the end of the transporting screw 34 to rotate the transporting screw 34, pick-up shafts 40 for guiding the optical pick-up 33, and a connector (not shown) for connecting the optical pick-up 33 to the transporting screw 34.

The pick-up shafts 40 are a pair of shafts 41 and 42 arranged in parallel with each other with the turntable 32 arranged therebetween. The optical pick-up 33 is supported by the two pick-up shafts 41 and 42 to move linearly. One pick-up shaft 41 of the two pick-up shafts 40 penetrates a side of the pick-up base 33b to support the optical pick-up 33, while the other pick-up shaft 42 loads the opposite side of the pick-up base 33b to support the optical pick-up 33. Hereinafter, the pick-up shaft 41 penetrating the pick-up base 33b is indicated as a first pick-up shaft and the other pick-up shaft 42 is indicated as a second pick-up shaft.

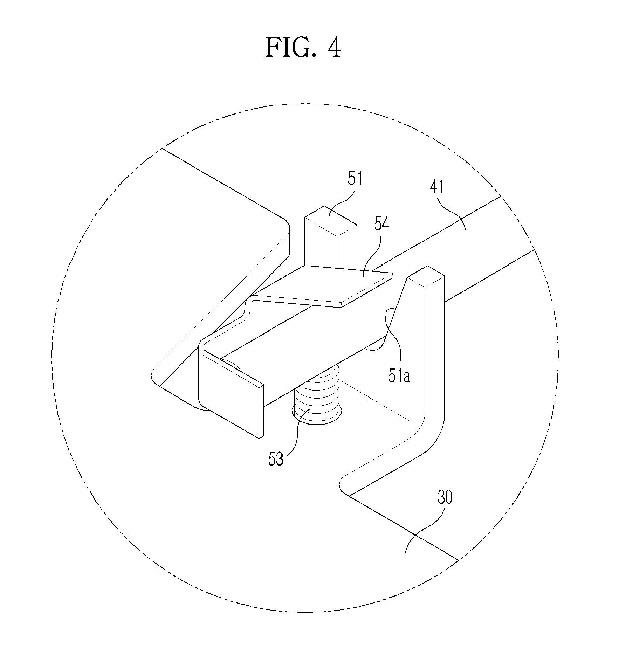

Moreover, as shown in FIGS. 3 and 4, the optical disc drive according to an embodiment of the present invention includes a skew adjusting device 50 for adjusting the slope of the optical pick-up 33 by adjusting the height of the pick-up shafts 40. The skew adjusting device 50 raises and lowers the pick-up shafts 40 when the rotation plane of the optical disc (not shown) and the movement plane of the optical pick-up 33 are not parallel to each other such that the two planes are parallel to each other. Particularly, the skew adjusting device 50 is structured such that the misalignment of the rotation centre O of the optical disc (not shown) and the light beam centre O' of the optical pick-up 33 can be minimized.

The skew adjusting device 50 includes an adjusting part for moving the pick-up shaft 41 vertically to adjust the height of the pick-up shaft 41, and shaft guides 51 for guiding the movement of the pick-up shaft 41 such that the pick-up shaft 41 can move vertically and horizontally. The shaft guides 51 are installed at the sides of the pick-up shaft 41. Preferably, a second pick-up shaft 42 is provided with guide members 52 for guiding the second pick-up shaft 42 only in a vertical direction as employed in the optical disc drive as shown in FIG. 1 and FIG. 2.

The adjusting part may include adjusting screws 53 penetrating the base chassis 30 and positioned in the lower side of the pickup-shaft 41. Thus, since the pick-up shaft 41 is raised or lowered as the adjusting screws 53 are rotated in the forward direction or in the reverse direction, the height of the pick-up shaft 41 can be adjusted.

The shaft guides 51 each has a guide surface 51 a for allowing the pick-up shaft 41 to move in the diagonal direction when the pick-up shaft 41 is moved by the adjusting screws 53. The guide surfaces 51a guide the pick-up shaft 41 towards the turntable 32 when the pick-up shaft 41 is moved upward by the adjusting screws 53 and away from the turntable 32 when the pick-up shaft 41 moves downward.

Moreover, the optical disc drive according to an embodiment of the present invention further includes elastic members for elastically biasing the pick-up shaft 41 toward the guide surfaces 51a of the shaft guides 51. Such elastic members may include elastic plates 54 respectively having an end fixed to the base chassis 30 and a side contacting the upper side of the pick-up shaft 41 to press the pick-up shaft 41 toward the guide surface 51a.

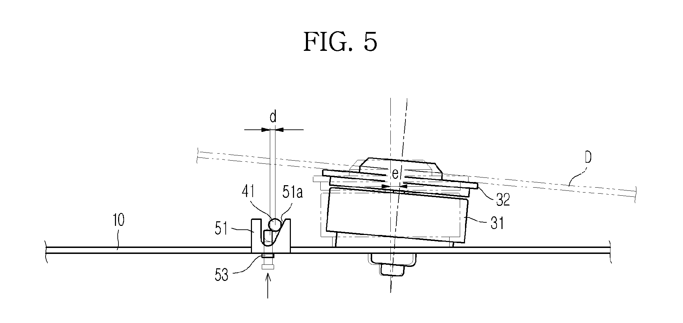

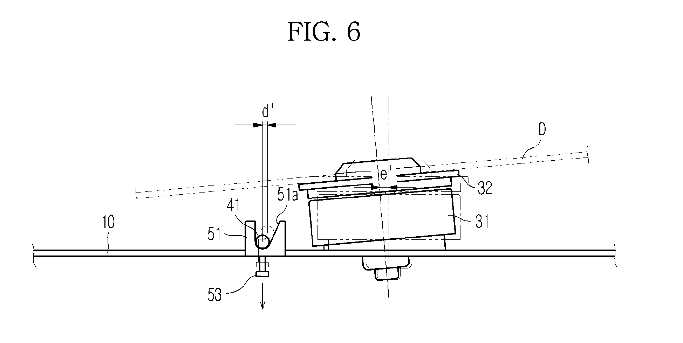

Hereinafter, the operation of the optical disc drive according to an embodiment of the present invention will be described in detail. FIG. 5 is a view illustrating an example adjustment performed when an optical disc in an optical disc drive is titled in a clockwise direction according to an embodiment of the present invention, and FIG. 6 is a view illustrating an example adjustment performed when the optical disc in an optical disc drive is tilted in a counterclockwise direction according to an embodiment of the present invention. For the convenience, the elastic members are omitted in FIGS. 5 and 6.

As shown in FIG. 5, if the turntable 32 is tilted to the right so that the optical disc D is tilted in the clockwise direction, in order to adjust the movement plane of the optical pick-up 33 (as shown in FIG. 3) to be parallel to the optical disc D, the adjusting screws 53 are rotated to move the pick-up shaft 41 upward. Then, the pick-up shaft 41 is moved upward, and is guided by the guide surfaces 51a of the shaft guides 51 (as shown in FIG. 4) to move to the right by a predetermined distance d. Therefore, the traveling distance d compensates the misalignment e of the rotation centre of the optical disc D and the centre of the optical pick-up 33, generated when the turntable 32 is tilted to the right, by a predetermined amount.

Equally, as shown in FIG. 6, if the turntable 32 is tilted to the left so that the optical disc D is tilted in the counterclockwise direction, in order to adjust the movement plane of the optical pick-up 33 to be parallel to the optical disc D, the adjusting screws 53 are rotated to move the pick-up shaft 41 downward. Then, the pick-up shaft 41 is moved downward, and guided and moved by a predetermined distance d' by the guide surfaces 51a of the shaft guides 51 (as shown in FIG. 4).

The traveling distance d' compensates the misalignment e' of the rotation centre of the optical disc D and the centre of the optical pick-up 33 generated as the turntable 32 is tilted to the left.

As described above, the optical disc drive according to the present invention can adjust the skew and compensate for error due to the misalignment of the rotation centre of the optical disc and the light beam centre of the optical pick-up. Thus, the optical disc drive according to the present invention can minimize the error signal generated as the light beam centre of the optical pick-up is shifted from the centre of the rotating optical disc so that the performance of the optical disc drive can also be improved.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, the components of the optical disc drive, as shown in FIG. 3, can be implemented differently, as long as the pick-up shaft can be adjusted in both a vertical direction and a horizontal direction to compensate for any misalignment between a rotation centre of the optical disc and a light beam centre of the optical pick-up. Accordingly, the present invention is not limited to the various example embodiments disclosed, but includes all embodiments falling within the scope of the appended claims.

## Claims

1. An optical disc drive comprising:
a turntable (32) for receiving an optical disk;
an optical pick-up module (33) for projecting a light beam onto an optical disk received on the turntable;
support means (41, 42) for guiding movement of the optical pick-up module in a radial direction of the optical disc;
means (53) for adjusting the support means to adjust a slope of the optical pick-up module; and
means (51) for causing the support means to move to compensate for misalignment between a centre of rotation of the optical disc and a centre of the light beam in the optical pick-up module.

2. An optical disc drive according to claim 1, wherein the support means comprises pick-up shafts along which the optical pick-up module is arranged to move.

3. An optical disc drive according to claim 2, wherein the adjusting means causes vertical movement of the pick-up shafts to adjust a slope of the optical pick-up module.

4. An optical disc drive according to claim 3, wherein the guide means comprises shaft guides for guiding the pick-up shafts to travel vertically and horizontally.

5. An optical disc drive according to claim 4, wherein the shaft guides each comprise a guide surface (51a) for guiding a pick-up shaft to move towards the turntable when the pick-up shaft moves upward, and for guiding the pick-up shaft to move away from the turntable when the pick-up shaft moves downward.

6. An optical disc drive according to claim 5, further comprising elastic members (54) for elastically biasing the pick-up shafts toward the guide surfaces.

7. An optical disc drive according to claim 6, wherein the elastic members comprise elastic plates contacting the upper sides of the pick-up shafts to press the pick-up shafts towards the guide surfaces.

8. An optical disc drive according to claim 5, 6 or 7, wherein the guide surfaces include slopes for allowing the pick-up shafts to travel in a diagonal direction when the pick-up shafts are moved by the adjusting means.

9. An optical disc drive according to any one of claims 2 to 8, wherein the pick-up shafts include a first pick-up shaft (41) passing through the optical pick-up module and supporting the optical pick-up module, and the shaft guides are installed to the first pick-up shaft.

10. An optical disc drive according to any one of claims 2 to 9, wherein the adjusting means comprises adjusting screws rotatably installed in the lower sides of the pick-up shafts to rotate in the forward direction and in the reverse direction such that the pick-up shafts are raised and lowered.

11. An optical disc drive as claimed in any one of claims 2 to 10, wherein, when the turntable is tilted to the right so that the optical disc is tilted in a clockwise direction, the adjusting means adjusts at least one pick-up shaft upwards to the right so as to ensure that a rotation centre of the optical disc is aligned with a light beam centre of the optical pick-up module.

12. The optical disc drive as claimed in any one of claims 2 to 10, wherein, when the turntable is tilted to the left so that the optical disc is tilted in a counterclockwise direction, the adjusting means adjusts at least one pick-up shaft downwards to the left so as to ensure that a rotation centre of the optical disc is aligned with a light beam centre of the optical pick-up module.
